# EUROPEAN PATENT SPECIFICATION

(11) **EP 1 165 010 B1**
(45) Date of publication and mention of the grant of the patent: **12.01.2005**
(21) Application number: 00916935.0
(22) Date of filing: 14.03.2000
(51) Int. Cl.: A61J 3/00

(54) **PRECISION DISPENSER FOR LIQUIDS**
PRÄZISIONS-ABGABEVORRICHTUNG FÜR FLÜSSIGKEITEN
DISTRIBUTEUR DE PRECISION POUR LIQUIDE

(30) Priority: 16.03.1999 IT FI990052
(43) Date of publication of application: 02.01.2002
(60) Divisional application: 04104511.3
(73) Proprietor: Molteni L. E C. Dei Fratelli Alitti Societa' Di Esercizio S.P.A., 50018 Scandicci (IT)
(72) Inventor: ANGELI, Roberto, I-50018 Scandicci (IT)
(74) Representative: Gervasi, Gemma, Dr.
(86) International application number: PCT/EP2000/002222
(87) International publication number: WO 2000/054724

(56) References cited:
- EP-A- 0 763 728
- CH-A- 456 885
- US-A- 3 887 110
- PATENT ABSTRACTS OF JAPAN vol. 014, no. 057 (C-0684), 2 February 1990 (1990-02-02) & JP 01 284327 A (KANEBO LTD), 15 November 1989 (1989-11-15)

## Description

### Field of the invention and prior art

The present invention regards a precision dispenser for controlled delivery of liquid products, in particular methadone or other medicinal preparations.

In the current state of the art, dispensers of liquid methadone are known in which a pre-set amount of liquid is taken from a feed reservoir by means of a peristaltic pump. The dose of liquid is then poured into a glass to be taken by the patient.

These known dispensers are moreover generally managed by a computer for identification and management of the administrations envisaged for the various patients.

However, the known dispensers present a number of drawbacks linked in particular to the precision that they are able to provide in dosing, this aspect being of particular consequence in the administration of methadone, both on account of the importance and delicacy of the cases treated, and on account of the need for being able to certify exactly the amounts of methadone actually supplied.

### Scope of the invention

A prime purpose of the present invention is therefore to provide a dispenser for liquid products, and in particular methadone, that affords high precision both in dosing and in calculating the quantities handled during operation.

### Summary of the invention

The above purpose has been achieved according to the invention with a dispenser of liquid methadone, in which the hydraulic circuit comprises a sector for circulation of the liquid handled. The circulation makes it possible to set initial conditions that can be repeated in an identical manner at each new delivery. The circuit is moreover provided with an intermediate reservoir which is distinct from the supply flask and serves as a bleeder for possible air bubbles and has a check point for checking the amount of liquid present in the circuit, as well as for checking the temperature conditions.

The hydraulic circuit according to the invention comprises a pump, preferably a peristaltic pump, which is fed by an interchangeable flask containing liquid and sends the liquid on to an intermediate reservoir. The output of the latter is connected, via a manual valve, to a high-precision, pump, preferably of the piston type, and subsequently to a three-way solenoid valve, which has one output connected to the intermediate reservoir and the other output connected to the final receptacle of the amount of liquid to be delivered. The intermediate reservoir is equipped with level probes, and possibly with a temperature probe.

A first advantage is represented by the high precision achievable and the assurance of being able to repeat delivery of liquid with identical circuit starting conditions.

A second advantage is represented by the possibility of maintaining the liquid in movement when the device is not in use, so preventing any possible precipitation or separation of various phases.

These and other advantages will emerge more clearly from the ensuing description and from the annexed drawings, which are provided as a non-limiting example.

### Brief description of the drawings

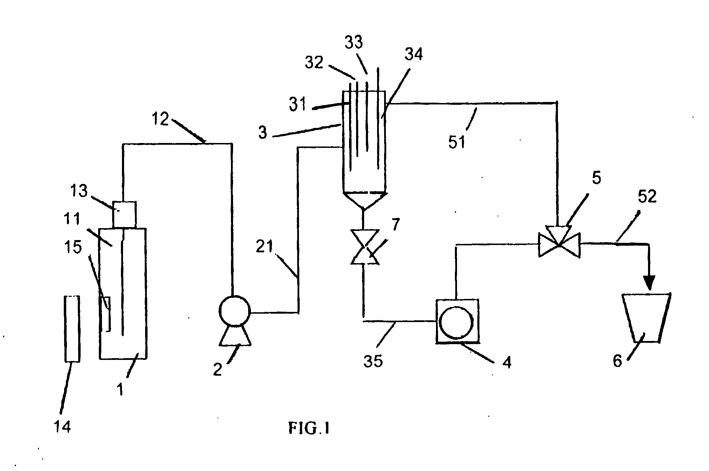

- Figure 1 shows a diagram of the dispenser according to the invention;
- Figures 2.1, 2.2, 2.3, and 2.4 present a flowchart showing the various phases of the method according to the invention, in which P1 stands for Peristaltic pump, P2 stands for Piston pump, EV stands for Solenoid valve, S2 stands for intermediate tank, M2 stands for Maximum level of S2. In particular, figures 2.1 and 2.2 relate to the filling and maintenance of level in intermediate reservoir (Routine 01) and figures 2.3 and 2.4 relate to the charging of circuit of main pump (Routine 02); and
- Figures 3a and 3b present, respectively, a side view and a top view of a flask for the apparatus of Figure 1.

### Detailed description of the invention

With reference to the attached figures, a dispenser according to the invention is made up of:
- a pump 2, for example a peristaltic pump, fed, via pipes 12, by an interchangeable flask 1 containing liquid;
- an intermediate reservoir 3 fed, via pipes 21, by the pump 2 and provided with one or more level probes 31-33, and possibly a temperature probe 34;
- a high-precision, pump 4, preferably of the type with one or more pistons, fed, via pipes 35 and valve 7, by the said reservoir 3;
- a three-way valve 5, set downstream of the pump 4, from which it receives the liquid at input, and having two output ways, one output leading, via pipes 51, to the reservoir 3, and the other leading, via further pipes 52, to a final receptacle 6 for collecting the liquid to be delivered; and
- a microprocessor unit for control and management of the pumps 2, 4, of the maintenance functions and of the probes 31-34.

According to the invention, and as may be seen from the attached drawings, the part of the hydraulic circuit between the reservoir 3 and the solenoid valve 5 makes up a circulation circuit H, in which the liquid can be made to circulate by means of the pump 4 and the three-way valve 5.

During operation, the pump 2 sucks up liquid from the flask 1 and sends it into the reservoir 3 until an appropriate level is reached (which is subsequently maintained), this being detected by the probes 31-33. If the level is sufficient, the pump 4 starts to circulate the liquid until it ensures complete filling of the pipes.

At the first request for delivery, the control unit opens the valve 5 for delivery (hence, of course, closing the circulation way) for the period of delivery of the amount of liquid required.

Advantageously, in the example described the pump is a piston-type pump (TRAVCYL® . MODEL 16, manufactured by Encynova International Inc.), which is operated by a stepper motor and in which, at every cycle of known duration, the amount of liquid displaced is known exactly.

In the event of pauses in use between successive deliveries that might cause changes in the state of the liquid or deviations with respect to the pre-set start-of-delivery conditions, the pump 4 carries out a predetermined number of cycles.

In order to guarantee the exact repetition of each delivery, the pump 4 is moreover provided with means for the determination of an initial zero, from which to start measurement of the amount being delivered. According to the invention, the pump 4 is then reset at each delivery and is brought back to a start-of-delivery position.

The above-mentioned means consist of an electromagnetic proximity sensor which acts as reference for the stroke of the pump piston and which controls advance of the stepper motor.

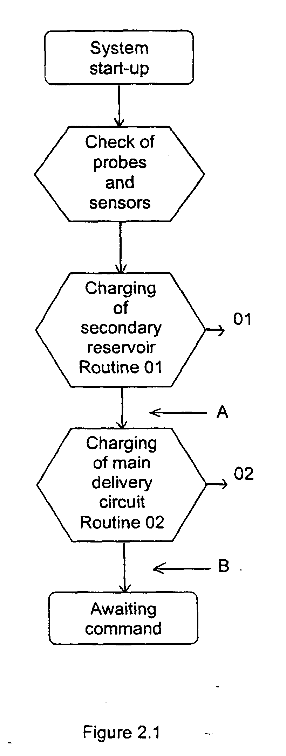

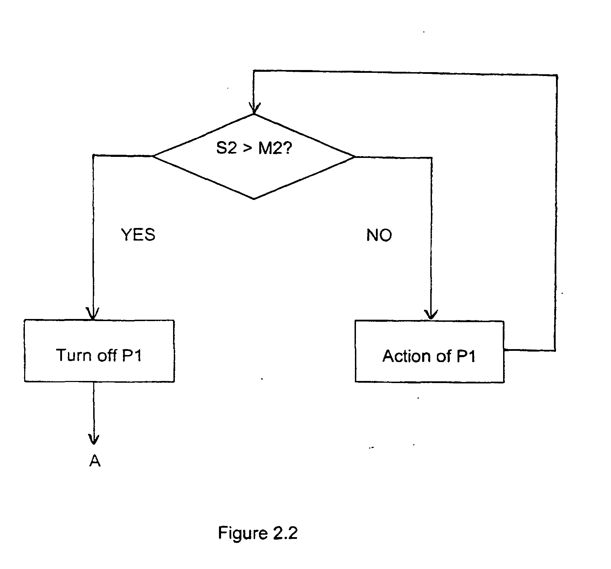

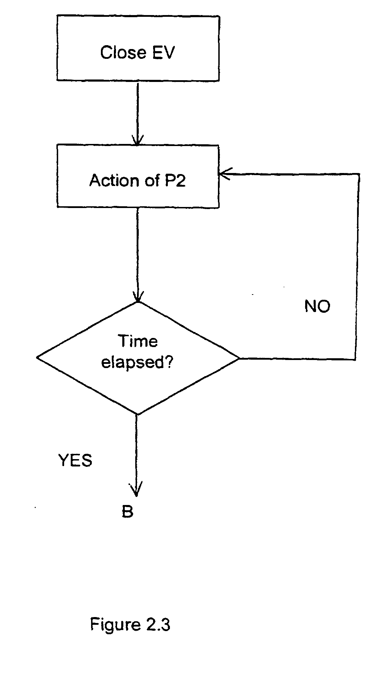

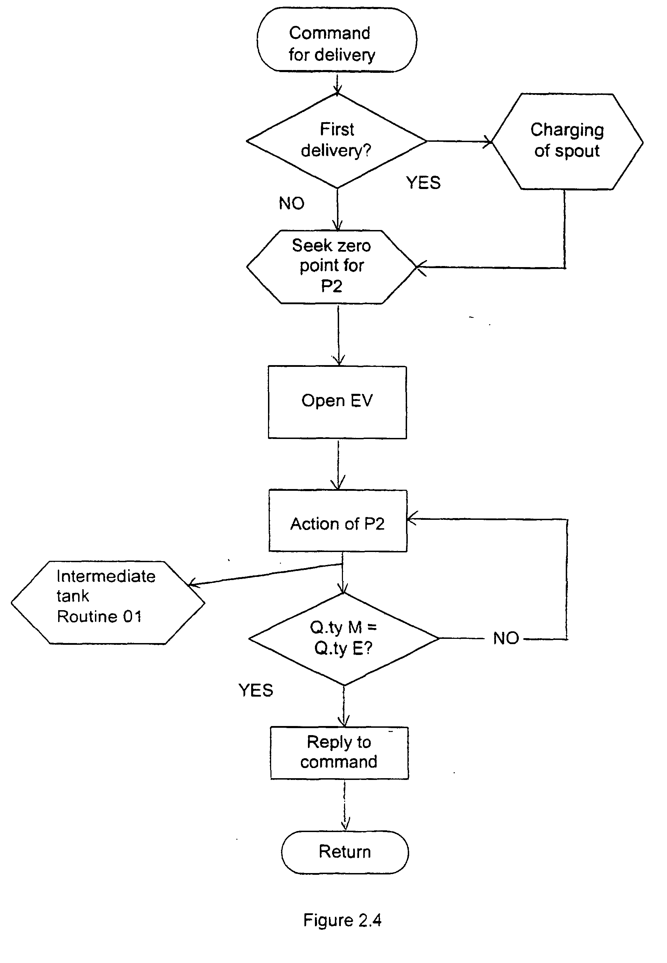

With reference to Figures 2.1 - 2.4, the invention further comprises a method for precision dosing of liquids, in particular by means of a dispenser of the type described above.

The method comprises the following steps:
- check of the control probes and sensors of the dispenser;
- charging, for example by means of a peristaltic pump fed by a flask containing the liquid to be delivered, of an intermediate reservoir S2 up to a maximum level M2 (routine 01) detected by a level probe;
- charging of a circulation circuit operated by a main pump P2 (routine 02), for example of the piston type, the circuit extending from the reservoir S2 up to a delivery valve EV;
- in the case of a command for first delivery, charging of the spout of the flask for feeding the liquid, and search for a zero point of the pump; for subsequent deliveries with the same flask, search for the zero point of the pump;
- opening of the delivery valve EV and operation of the pump P2;
- execution of routine 01 for check on level of the reservoir S2;
- check on the amount delivered: if it corresponds to the amount envisaged, interruption of delivery and closing of the delivery valve EV; and
- waiting for new command for delivery.

In addition, in the event of prolonged inactivity between successive deliveries, according to the method the circulation routine 02 is carried out'to prevent any possible modifications in the state of the liquid (separation of phases, formation of air bubbles, etc.) present in the circuit of the pump 4.

## Claims

1. A precision dispenser for liquid comprising an intermediate reservoir (3) provided with at least one level probe (31) and a first pump (4) placed downstream said reservoir (3) and a valve (5) placed downstream said first pump (4),
**characterised in that** it further comprises a second pump (2) feeding said intermediate reservoir (3), and which is fed through a suction tube (16) from a flask (1) containing liquid, to which flask the second pump (2) is connectable by means of an attachment (13) of the dispenser; that said valve (5) is a three-way solenoid valve receiving the liquid at input from first pump (4) and having two output ways, one output leading to the reservoir (3) and the other leading to a final output for collecting the liquid to be delivered; and that it further comprises a microprocessor unit for control and management of the first and second pumps (2, 4), of the level probe and of the maintenance functions.

2. Dispenser according to claim 1, **characterised in that** it comprises a reservoir (3) provided with more than one level probes (31-33) controlled by said microprocessor unit.

3. Dispenser according to claim 1, **characterised in that** said reservoir (3) and said valve (5) form a liquid circulation circuit (H) in which the liquid can be circulated by means of said first pump (4).

4. A dispenser according to Claim 1, **characterized in that** the first pump (4) is a piston pump having one or more pistons, operated by a stepper motor.

5. Dispenser according to claim 4, **characterised in that** said first pump (4) is provided with means for the determination of an initial zero in order to guarantee the exact repetition of each delivery.

6. A dispenser according to Claim 5, **characterized in that** the said means are constituted by a proximity sensor capable of detecting the position of the pistons of the first pump and controlling advance of the stepper motor.

7. A dispenser according to Claim 1, **characterized in that** it comprises means (14) for identifying the flask of liquid used.

8. A dispenser according to Claim 7, **characterized in that** the said means are RFID sensors.

9. A dispenser according to Claim 1, **characterized in that** it comprises a temperature probe (34).

10. A dispenser according to Claim 1, **characterized in that** the said suction tube (16) is integral with the said attachment (13).

11. A method for dosing liquids, comprising the following steps:
- providing a dispenser according to claims 1-10;
- check of the control probes and sensors of the dispenser,
- charging, for example by means of peristaltic pump fed by a flask containing the liquid to be delivered, of an intermediate reservoir (S2) up to a maximum level (M2) detected by a level probe;
- charging of a circulation circuit operated by a main pump (P2) of the piston type, the circuit extending from the reservoir (S2) up to a multi-way delivery valve (EV);
- in the case of a command for first delivery, charging of the spout of the flask for feeding the liquid, and search for a zero point of the pump; for subsequent deliveries with the same flask, search for the zero point of the pump;
- opening of the delivery valve (EV) and operation of the pump (P2);
- execution of a check on level of the reservoir (S2);
- check on the amount delivered: if it corresponds to the amount envisaged, interruption of delivery and closing of the delivery valve (EV); and
- waiting for new command for delivery.

12. Method according to Claim 11, in which in the event of prolonged inactivity between successive deliveries, the liquid circulation is carried out to prevent any possible modifications in the state of the liquid present in the circuit of the first pump (4).

## Patentansprüche

1. Präzisions-Abgabevorrichtung für Flüssigkeiten mit einem Zwischenbehälter (3), der mit zumindest einer Füllstand-Sonde (31) versehen ist, und einer ersten Pumpe (4), die stromabwärts zu dem Behälter (3) plaziert ist, und einem Ventil (5), das stromabwärts zu der ersten Pumpe (4) plaziert ist, **dadurch gekennzeichnet, dass** sie ferner eine zweite Pumpe (2) aufweist, die den Zwischenbehälter speist und die durch ein Saugrohr (16) von einem Kolben (1), der eine Flüssigkeit enthält, gespeist wird, wobei die zweite Pumpe (2) durch einen Anschluss (13) der Abgabevorrichtung an den Kolben anschliessbar ist; dass das Ventil (5) ein Drei-Wege-Magnetventil ist, welches die Flüssigkeit an einem Eingang von der ersten Pumpe (4) erhält und zwei Ausgangswege aufweist, wobei ein Ausgang zu dem Behälter (3) führt und der andere zu einem Endausgang zum Sammeln der abzugebenden Flüssigkeit führt; und, dass sie ferner eine Mikroprozessoreinheit zur Steuerung und Verwaltung der ersten und der zweiten Pumpe (2,4), der Füllstand-Sonde, und der Instandhaltungsfunktionen, aufweist.

2. Abgabevorrichtung nach Anspruch 1, **dadurch gekennzeichnet, dass** sie einen Behälter (3) mit mehr als einer Füllstand-Sonde (31-33), welche durch die Mikroprozessoreinheit gesteuert werden, aufweist.

3. Abgabevorrichtung nach Anspruch 1, **dadurch gekennzeichnet, dass** der Behälter (3) und das Ventil (5) einen Flüssigkeits-Zirkulationskreislauf (H) bilden, in dem die Flüssigkeit mittels der ersten Pumpe (4) zirkuliert werden kann.

4. Abgabevorrichtung nach Anspruch 1, **dadurch gekennzeichnet, dass** die erste Pumpe (4) eine Kolbenpumpe mit einem oder mehreren Kolben ist, die durch einen Schrittmotor betrieben wird.

5. Abgabevorrichtung nach Anspruch 4, **dadurch gekennzeichnet, dass** die erste Pumpe (4) mit Einrichtungen zur Bestimmung eines anfänglichen Nullpunkts versehen ist, um die genaue Wiederholung von jeder Abgabe zu garantieren.

6. Abgabevorrichtung nach Anspruch 5, **dadurch gekennzeichnet, dass** die Einrichtungen durch einen Näherungssensor gebildet werden, der in der Lage ist, die Stellung der Kolben der ersten Pumpe zu detektieren und den Schub des Schrittmotors zu steuern.

7. Abgabevorrichtung nach Anspruch 1, **dadurch gekennzeichnet, dass** sie Einrichtungen (14) zum Erkennen des verwendeten Flüssigkeitskolbens aufweist.

8. Abgabevorrichtung nach Anspruch 7, **dadurch gekennzeichnet, dass** die Einrichtungen RFID-Sensoren sind.

9. Abgabevorrichtung nach Anspruch 1, **dadurch gekennzeichnet, dass** sie eine Temperatursonde (34) aufweist.

10. Abgabevorrichtung nach Anspruch 1, **dadurch gekennzeichnet, dass** das Saugrohr (16) integral mit dem Anschluss (13) ist.

11. Verfahren zur Dosierung von Flüssigkeiten, das die folgenden Schritte aufweist:
- Bereitstellen einer Abgabevorrichtung nach den Ansprüchen 1-10;
- Prüfen der Kontrollsonden und -sensoren der Abgabevorrichtung;
- Füllen, beispielsweise durch eine Schlauchradpumpe, die durch einen Kolben, der die abzugebende Flüssigkeit aufweist, gespeist wird, eines Zwischenbehälters (S2) bis zu einem maximalen Stand (M2), der durch eine Füllstand-Sonde detektiert wird;
- Füllen eines Zirkulationskreislaufs, der durch eine Hauptpumpe (P2) nach Kolben-Art betrieben wird, wobei der Kreislauf sich von dem Behälter (S2) bis zu einem Mehrwege-Abgabeventil (EV) erstreckt;
- im Fall eines Befehls für eine erste Abgabe, Füllen des Ausflusses des Kolbens für das Speisen der Flüssigkeit, und Suchen nach einem Nullpunkt der Pumpe; für folgende Abgaben mit dem gleichen Kolben, Suchen nach dem Nullpunkt der Pumpe;
- Öffnen des Abgabeventils (EV) und Betreiben der Pumpe (P2);
- Durchführen einer Prüfung des Füllstands des Behälters (S2);
- Prüfen der abgegebenen Menge: wenn sie mit der angestrebten übereinstimmt, Unterbrechen der Abgabe und Schließen des Abgabeventils (EV); und
- Warten auf einen neuen Abgabebefehl.

12. Verfahren nach Anspruch 11, in dem, im Falle von verlängerter Inaktivität zwischen aufeinander folgenden Abgaben, die Flüssigkeitszirkulation ausgeführt wird, um jede mögliche Änderung des Zustands der Flüssigkeit, die in dem Kreislauf der ersten Pumpe (4) vorhanden ist, zu verhindern.

## Revendications

1. Distributeur de précision pour des liquides comprenant un réservoir intermédiaire (3) présentant au moins une sonde de niveau (31) et une première pompe (4) placée en aval dudit réservoir (3) et une vanne (5) placée en aval de ladite première pompe (4), **caractérisé en ce qu'**il comprend en outre une seconde pompe (2) alimentant ledit réservoir intermédiaire (3), et qui est alimenté à travers un tube d'aspiration (16) d'un flacon (1) contenant du liquide, auquel flacon la seconde pompe (2) peut être reliée au moyen d'une fixation (13) du distributeur; **en ce que** ladite vanne (5) est une vanne à solénoïde à trois voies, recevant le liquide à l'entrée de la première pompe (4) et ayant deux voies de sortie, une sortie menant au réservoir (3) et l'autre menant à une sortie finale pour recueillir ledit liquide à délivrer; et **en ce qu'**il comprend en outre une unité de microprocesseur pour la commande et la gestion des première et seconde pompes (2,4), de la sonde de niveau et des fonctions d'entretien.

2. Distributeur selon la revendication 1, **caractérisé en ce qu'**il comprend un réservoir (3) présentant plus qu'une sonde de niveau (31,33) commandée par ladite unité de microprocesseur.

3. Distributeur selon la revendication 1, **caractérisé en ce que** ledit réservoir (3) et ladite vanne (5) forment un circuit de circulation de liquide (H), dans lequel le liquide peut être amené à circuler au moyen de ladite première pompe (4).

4. Distributeur selon la revendication 1, **caractérisé en ce que** la première pompe (4) est une pompe à piston comportant un ou plusieurs pistons, actionnés par un moteur pas-à-pas.

5. Distributeur selon la revendication 4, **caractérisé en ce que** ladite première pompe (4) présente des moyens pour la détermination d'un zéro initial pour garantir la répétition exacte de chaque émission.

6. Distributeur selon la revendication 5, **caractérisé en ce que** lesdits moyens sont constitués par un capteur de proximité apte à détecter la position des pistons de la première pompe et à régler l'avance du moteur pas à pas.

7. Distributeur selon la revendication 1, **caractérisé en ce qu'**il comprend un moyen (14) pour identifier le flacon de liquide utilisé.

8. Distributeur selon la revendication 7, **caractérisé en ce que** lesdits moyens sont des capteurs RFID.

9. Distributeur selon la revendication 1, **caractérisé en ce qu'**il comprend une sonde de température (34).

10. Distributeur selon la revendication 1, **caractérisé en ce que** ledit tube d'inspiration (16) est intégral avec ladite fixation (13).

11. Procédé de dosage de liquides comprenant les étapes consistant à:
- réaliser un distributeur selon les revendications 1 à 10;
- vérifier les sondes de commande et les capteurs du distributeur;
- charger, par exemple au moyen d'une pompe péristaltique alimentée par un flacon contenant le liquide à émettre, un réservoir intermédiaire (S2) jusqu'à un niveau maximal (M2) détecté par une sonde de niveau;
- charger un circuit de circulation actionné par une pompe principale (P2) du type à piston, le circuit s'étendant du réservoir (S2) jusqu'à une vanne d'émission à voies multiples (EV);
- dans le cas d'une commande d'une première émission, charger le bec du flacon pour amener le liquide, et chercher un point zéro de la pompe; pour des émissions suivantes avec le même flacon, chercher le point zéro de la pompe;
- ouvrir la vanne d'émission (EV) et actionner la pompe (P2);
- exécuter une vérification du niveau du réservoir (S2);
- vérifier la quantité émise: si elle correspond à la quantité envisagée, interrompre l'émission et fermer la vanne d'émission (EV); et
- attendre une nouvelle commande pour l'émission.

12. Procédé selon la revendication 11, où dans le cas d'une inactivité prolongée entre des émissions successives, la circulation du liquide est exécutée pour empêcher toute modification éventuelle de l'état du liquide présent dans le circuit de la première pompe (4).
